(19) Europäisches Patentamt
European Patent Office
Office européen des brevets

(11) **EP 3 113 381 A1**

(12) **EUROPÄISCHE PATENTANMELDUNG**

(43) Veröffentlichungstag:
**04.01.2017  Patentblatt 2017/01**

(51) Int Cl.:
*H04B 7/04* (2017.01)      *H04L 25/02* (2006.01)

(21) Anmeldenummer: **16171330.0**

(22) Anmeldetag: **25.05.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **29.06.2015   DE 102015212093**

(71) Anmelder: **KT-Elektronik, Klaucke und Partner GmbH**
**12165 Berlin (DE)**

(72) Erfinder: **FREY, Matthias**
**10829 Berlin (DE)**

(74) Vertreter: **Burger, Markus et al**
**Schoppe, Zimmermann, Stöckeler**
**Zinkler, Schenk & Partner mbB**
**Patentanwälte**
**Radlkoferstraße 2**
**81373 München (DE)**

(54) **EMPFÄNGER, SENDER UND VERFAHREN ZUM ERMITTELN VON KANALKOEFFIZIENTEN**

(57)      Ausführungsbeispiele der vorliegenden Erfindung schaffen einen Empfänger, wobei der Empfänger ausgebildet ist, um eine Empfangssignalstärke bei Verwendung eines ersten Ausbreitungswegs zwischen einem Sender und dem Empfänger zu ermitteln, um einen Betrag eines ersten Kanalkoeffizienten zu erhalten, eine Empfangssignalstärke bei Verwendung eines zweiten Ausbreitungswegs zwischen dem Sender und dem Empfänger zu ermitteln, um einen Betrag eines zweiten Kanalkoeffizienten zu erhalten, und eine Empfangssignalstärke eines Signals, das sich bei gleichzeitiger Verwendung zweier Ausbreitungswege durch Überlagerung ergibt, zu ermitteln, um einen Betrag einer Kombination des ersten Kanalkoeffizienten und des zweiten Kanalkoeffizienten zu erhalten, wobei der Empfänger ausgebildet ist, um einen Winkel zwischen dem ersten Kanalkoeffizienten und dem zweiten Kanalkoeffizienten basierend auf den Beträgen des ersten Kanalkoeffizienten, des zweiten Kanalkoeffizienten und der Kombination des ersten Kanalkoeffizienten und des zweiten Kanalkoeffizienten zu berechnen, wobei zumindest der Sender oder der Empfänger zumindest zwei Antennen aufweist, und wobei der erste Ausbreitungsweg und der zweite Ausbreitungsweg zwischen verschiedenen Kombinationen von Antennen des Senders und Empfängers verlaufen.

FIG 1A

FIG 1B

FIG 1C

2

**Beschreibung**

Ausführungsbeispiele der vorliegenden Erfindung beziehen sich auf einen Empfänger, und im speziellen, auf einen Empfänger, der ein von einem Sender empfangenes Signal nutzt, um Kanalkoeffizienten eines Kanals zwischen dem Sender und Empfänger zu ermitteln. Weitere Ausführungsbeispiele beziehen sich auf einen Sender. Weitere Ausführungsbeispiele beziehen sich auf ein System mit einem Sender und einem Empfänger. Weitere Ausführungsbeispiele beziehen sich auf ein Verfahren zum Ermitteln von Kanalkoeffizienten eines Kanals zwischen einem Sender und einem Empfänger.

Die Kanalinformation wird üblicherweise mit vom Modulationsverfahren abhängigen Pilot-signalen, die am Empfänger ausgewertet werden, bestimmt. Dazu muss das vollständige IQ-Signal am Empfänger ausgewertet werden und solche Verfahren [M. Biguesh und A. B. Gershman, "Training-Based MIMO Channel Estimation: A Study of Estimator Tradeoffs and Optimal Training Signals," IEEE Transactions on Signal Processing, pp. 884-896, März 2006.] werden bisher nicht mit Frequenzumtastung eingesetzt. Zwar gibt es Abhandlungen zur Kombination von MIMO (MIMO = Multiple Input Multiple Output, dt. bezeichnet in der Nachrichtentechnik ein Verfahren für die Nutzung mehrerer Sende- und Empfangsantennen zur drahtlosen Kommunikation) und FSK (FSK = Frequency Shift Keying, dt. Frequenzumtastung) [G. Leus, W. Zhao, G. B. Giannakis und H. Deliç, "Space-Time Frequency Shift-Keying".IEEE Transactions on Communications (Entwurf).] [E. Jandot und J.-C. Belfiore, "A 2x2 Antennas Bluetooth System," IEEE Communications Letters, September 2005.], jedoch wird hier eine Raum-Zeit-Kodierung eingesetzt, was insbesondere bedeutet, dass die Dekodierung am Empfänger aufwändiger als bei reinem Beamforming (dt. Strahlformung) ist und daher nicht mit normalen Transceiverchips umgesetzt werden kann; auch unterscheiden sich die dort beschriebenen Verfahren insofern, als dass sie keine Kanalinformationen ermitteln, sondern ihre Gewinne ohne Vorhandensein von Kanalinformationen realisieren. In dem Fall, dass handelsübliche, nicht MIMO-fähige Transceiverchips für ein Mehrantennensystem zum Einsatz kommen sollen, kann bisher lediglich ein Diversitätsgewinn über Antenna-Selection (dt. Antennenauswahl), nicht aber ein Gewinn durch Beamforming realisiert werden.

Der vorliegenden Erfindung liegt somit die Aufgabe zugrunde, ein einfacheres Konzept zum Ermitteln von Kanalkoeffizienten zu schaffen.

Diese Aufgabe wird durch die unabhängigen Patentansprüche gelöst.

Vorteilhafte Weiterbildungen finden sich in den abhängigen Patentansprüchen.

Ausführungsbeispiele der vorliegenden Erfindung schaffen einen Empfänger, wobei der Empfänger ausgebildet ist, um eine Empfangssignalstärke bei Verwendung eines ersten Ausbreitungswegs zwischen einem Sender und dem Empfänger zu ermitteln, um einen Betrag eines ersten Kanalkoeffizienten zu erhalten, eine Empfangssignalstärke bei Verwendung eines zweiten Ausbreitungswegs zwischen dem Sender und dem Empfänger zu ermitteln, um einen Betrag eines zweiten Kanalkoeffizienten zu erhalten, und eine Empfangssignalstärke eines Signals, das sich bei gleichzeitiger Verwendung zweier Ausbreitungswege durch Überlagerung ergibt, zu ermitteln, um einen Betrag einer Kombination des ersten Kanalkoeffizienten und des zweiten Kanalkoeffizienten zu erhalten, wobei der Empfänger ausgebildet ist, um einen Winkel zwischen dem ersten Kanalkoeffizienten und dem zweiten Kanalkoeffizienten basierend auf den Beträgen des ersten Kanalkoeffizienten, des zweiten Kanalkoeffizienten und der Kombination des ersten Kanalkoeffizienten und des zweiten Kanalkoeffizienten zu berechnen, wobei zumindest der Sender oder der Empfänger zumindest zwei Antennen aufweist, und wobei der erste Ausbreitungsweg und der zweite Ausbreitungsweg zwischen verschiedenen Kombinationen von Antennen des Senders und Empfängers verlaufen.

Weitere Ausführungsbeispiele schaffen einen Sender, wobei der Sender zumindest zwei Antennen aufweist, und ausgebildet ist, um die zumindest zwei Antennen anzusteuern, um in einem ersten Zeitschlitz ein Signal zu einem Empfänger unter Verwendung eines ersten Ausbreitungswegs zwischen dem Sender und Empfänger zu senden, in einem zweiten Zeitschlitz ein Signal zu dem Empfänger unter Verwendung eines zweiten Ausbreitungswegs zwischen dem Sender und Empfänger zu senden, und in einem dritten Zeitschlitz ein Signal zu dem Empfänger unter gleichzeitiger Verwendung zweier Ausbreitungswege zu senden, wobei der erste Ausbreitungsweg und der zweite Ausbreitungsweg zwischen verschiedenen Kombinationen von Antennen des Senders und Empfängers verlaufen.

Gemäß dem Konzept der vorliegenden Erfindung können die Empfangssignalstärken bei Verwendung eines ersten Ausbreitungswegs zwischen Sender und Empfänger, bei Verwendung eines zweiten Ausbreitungswegs zwischen Sender und Empfänger, und bei gleichzeitiger Verwendung zweier Ausbreitungswege gemessen werden, um aus den so gemessenen drei Signalstärken zum einen die Kanalkoeffizienten des ersten Ausbreitungswegs und des zweiten Ausbreitungswegs zu ermitteln, und um einen Winkel zwischen den Kanalkoeffizienten des ersten Ausbreitungswegs und des zweiten Ausbreitungswegs zu berechnen.

Weitere Ausführungsbeispiele schaffen ein Verfahren zum Ermitteln von Kanalkoeffizienten eines Kanals zwischen einem Sender und einem Empfänger, wobei das Verfahren aufweist:

-    Ermitteln einer Empfangssignalstärke bei Verwendung eines ersten Ausbreitungswegs zwischen dem Sender und dem Empfänger, um einen Betrag eines ersten Kanalkoeffizienten zu erhalten;

- Ermitteln einer Empfangssignalstärke bei Verwendung eines zweiten Ausbreitungswegs zwischen dem Sender und dem Empfänger, um einen Betrag eines zweiten Kanalkoeffizienten zu erhalten;
- Ermitteln einer Empfangssignalstärke eines Signals, das sich bei gleichzeitiger Verwendung zweier Ausbreitungswege durch Überlagerung ergibt, um einen Betrag einer Kombination des ersten Kanalkoeffizienten und des zweiten Kanalkoeffizienten zu erhalten; und
- Berechnen eines Winkels zwischen dem ersten Kanalkoeffizienten und dem zweiten Kanalkoeffizienten basierend auf den Beträgen des ersten Kanalkoeffizienten, des zweiten Kanalkoeffizienten und der Kombination des ersten Kanalkoeffizienten und des zweiten Kanalkoeffizienten; wobei zumindest der Sender oder der Empfänger zumindest zwei Antennen aufweist, und wobei der erste Ausbreitungsweg und der zweite Ausbreitungsweg zwischen verschiedenen Kombinationen von Antennen des Senders und Empfängers verlaufen.

Weitere Ausführungsbeispiele schaffen ein Verfahren zum Betrieb eines Senders mit zumindest zwei Antennen, wobei das Verfahren aufweist:

- Senden eines Signals zu einem Empfänger in einem ersten Zeitschlitz unter Verwendung eines ersten Ausbreitungswegs zwischen dem Sender und Empfänger;
- Senden eines Signals zu dem Empfänger in einem zweiten Zeitschlitz unter Verwendung eines zweiten Ausbreitungswegs zwischen dem Sender und Empfänger
- Senden eines Signals zu dem Empfänger in einem dritten Zeitschlitz unter gleichzeitiger Verwendung zweier Ausbreitungswege; wobei der erste Ausbreitungsweg und der zweite Ausbreitungsweg zwischen verschiedenen Kombinationen von Antennen des Senders und Empfängers verlaufen.

Ausführungsbeispiele der vorliegenden Erfindung werden Bezug nehmend auf die beiliegenden Figuren näher erläutert. Es zeigen:

Fig. 1a     eine schematische Ansicht eines Empfängers mit zwei Antennen, gemäß einem Ausführungsbeispiel der vorliegenden Erfindung;

Fig. 1b     eine schematische Ansicht eines Empfängers mit einer Antenne, gemäß einem Ausführungsbeispiel der vorliegenden Erfindung;

Fig. 1c     eine schematische Ansicht eines Empfängers mit zwei Antennen, gemäß einem Ausführungsbeispiel der vorliegenden Erfindung;

Fig. 2     eine schematische Ansicht eines Empfängers und eines Senders, gemäß einem Ausführungsbeispiel der vorliegenden Erfindung;

Fig. 3     eine schematische Ansicht eines Empfängers und eines Senders, gemäß einem Ausführungsbeispiel der vorliegenden Erfindung;

Fig. 4     eine schematische Ansicht eines Empfängers und eines Senders, gemäß einem Ausführungsbeispiel der vorliegenden Erfindung;

Fig. 5     eine schematische Ansicht eines Empfängers und eines Senders, gemäß einem Ausführungsbeispiel der vorliegenden Erfindung;

Fig. 6     eine Tabelle mit Trainingssequenz, gemäß einem Ausführungsbeispiel der vorliegenden Erfindung;

Fig. 7     ein Flussdiagramm eines Verfahrens Verfahren zum Ermitteln von Kanalkoeffizienten eines Kanals zwischen einem Sender und einem Empfänger, gemäß einem Ausführungsbeispiel der vorliegenden Erfindung; und

Fig. 8     ein Flussdiagramm eines Verfahrens zum Betrieb eines Senders mit zumindest zwei Antennen, gemäß einem Ausführungsbeispiel der vorliegenden Erfindung.

In der nachfolgenden Beschreibung der Ausführungsbeispiele der Erfindung werden in den Figuren gleiche oder gleichwirkende Elemente mit den gleichen Bezugszeichen versehen, so dass deren Beschreibung in den unterschiedlichen Ausführungsbeispielen untereinander austauschbar ist.

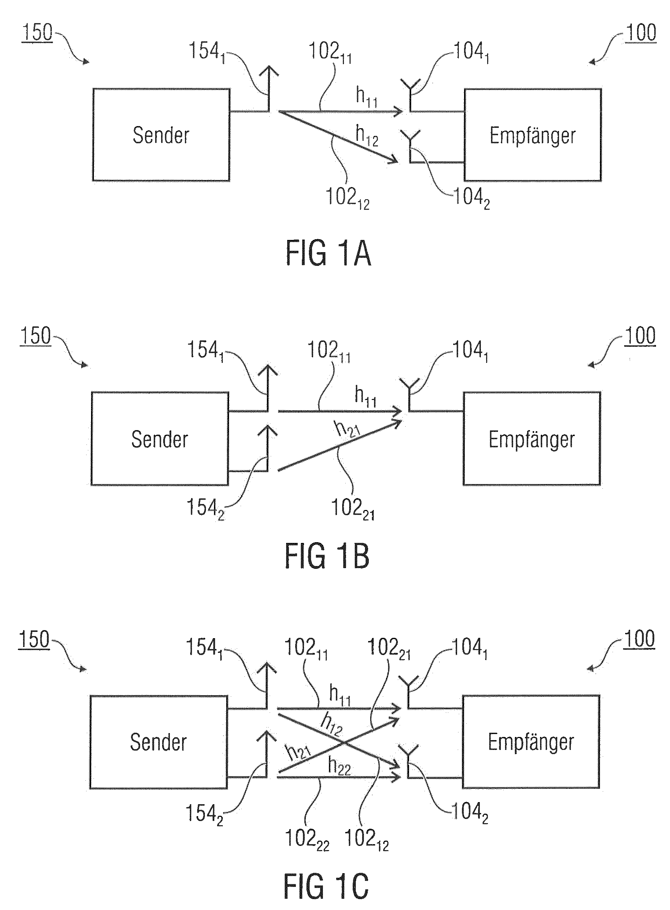

Fig. 1a bis 1c zeigen jeweils eine schematische Ansicht eines Empfängers 100 gemäß einem Ausführungsbeispiel der vorliegenden Erfindung. Der Empfänger 100 ist ausgebildet, um eine Empfangssignalstärke bei Verwendung eines ersten Ausbreitungswegs zwischen einem Sender 150 und dem Empfänger 100 zu ermitteln, um einen Betrag eines ersten Kanalkoeffizienten zu erhalten, eine Empfangssignalstärke bei Verwendung eines zweiten Ausbreitungswegs zwischen dem Sender 100 und dem Empfänger 150 zu ermitteln, um einen Betrag eines zweiten Kanalkoeffizienten zu erhalten, und eine Empfangssignalstärke eines Signals, das sich bei gleichzeitiger Verwendung zweier Ausbreitungswege durch Überlagerung ergibt, zu ermitteln, um einen Betrag einer Kombination des ersten Kanalkoeffizienten und des zweiten Kanalkoeffizienten zu erhalten.

Der Empfänger 100 ist ferner ausgebildet, um einen Winkel zwischen dem ersten Kanalkoeffizienten und dem zweiten Kanalkoeffizienten basierend auf den Beträgen des ersten Kanalkoeffizienten, des zweiten Kanalkoeffizienten und der Kombination des ersten Kanalkoeffizienten und des zweiten Kanalkoeffizienten zu berechnen.

Dabei weisen zumindest der Sender 150 oder der Empfänger 100 zumindest zwei Antennen auf, wobei der erste Ausbreitungsweg und der zweite Ausbreitungsweg zwischen verschiedenen Kombinationen von Antennen des Senders und Empfängers 100 verlaufen.

Es sei darauf hingewiesen, dass bei Ausführungsbeispielen der Empfänger 100 ausgebildet sein kann, um (nur) die Empfangssignalstärken zu messen. Ferner kann der Empfänger 100 ausgebildet sein, um zur Bestimmung von Kanalkoeffizienten keine Phasen oder Winkel zwischen empfangenen Signalen zu messen.

Fig. 1 a zeigt eine schematische Ansicht eines Empfängers 100 gemäß einem Ausführungsbeispiel der vorliegenden Erfindung. Wie in Fig. 1 a gezeigt ist, kann der Empfänger 100 zumindest zwei Antennen $104_1$ und $104_2$ aufweisen, während der Sender 150 zumindest eine Antenne $154_1$ aufweisen kann. Zwischen der zumindest einen Antenne $154_1$ des Senders $154_1$ und den zumindest zwei Antennen $104_1$ und $104_2$ des Empfängers 100 ergeben sich zumindest zwei Ausbreitungswege.

Der erste Ausbreitungsweg $102_{11}$ kann sich von der einen Antenne $154_1$ des Senders 150 zu einer ersten Antenne $104_1$ der zumindest zwei Antennen $104_1$ und $104_2$ des Empfängers 100 erstrecken, wobei sich der zweite Ausbreitungsweg $102_{12}$ von der einen Antenne $154_1$ des Senders 150 zu einer zweiten Antenne $104_2$ der zumindest zwei Antennen $104_1$ und $104_2$ des Empfängers 100 erstrecken kann.

In diesem Fall kann die Überlagerung, durch die sich das Signal, das sich bei gleichzeitiger Verwendung zweier Ausbreitungswege $102_{11}$ und $102_{12}$ durch Überlagerung ergibt, innerhalb des Empfängers 100 erfolgen.

Der Empfänger 100 kann ausgebildet sein, um eine Empfangssignalstärke bei Verwendung des ersten Ausbreitungswegs $102_{11}$ zu ermitteln, um einen Betrag eines ersten Kanalkoeffizienten $h_{11}$ zu erhalten, eine Empfangssignalstärke bei Verwendung des zweiten Ausbreitungswegs $102_{12}$ zu ermitteln, um einen Betrag eines zweiten Kanalkoeffizienten $h_{12}$ zu erhalten.

Ferner kann der Empfänger 100 ausgebildet sein, um eine Empfangssignalstärke eines ersten Signals, das sich bei gleichzeitiger Verwendung des ersten Ausbreitungswegs $102_{11}$ und des zweiten Ausbreitungswegs $102_{12}$ durch Überlagerung im Empfänger 100 ergibt, zu ermitteln, um einen Betrag einer Kombination des ersten Kanalkoeffizienten $h_{11}$ und des zweiten Kanalkoeffizienten $h_{12}$ zu erhalten.

Des Weiteren kann der Empfänger 100 ausgebildet sein, um einen Winkel zwischen dem ersten Kanalkoeffizienten $h_{11}$ und dem zweiten Kanalkoeffizienten $h_{12}$ basierend auf den Beträgen des ersten Kanalkoeffizienten $h_{11}$, des zweiten Kanalkoeffizienten $h_{12}$ und der Kombination des ersten Kanalkoeffizienten $h_{11}$ und des zweiten Kanalkoeffizienten $h_{12}$ zu berechnen.

Fig. 1b zeigt eine schematische Ansicht eines Empfängers 100 gemäß einem weiteren Ausführungsbeispiel der vorliegenden Erfindung. Verglichen mit Fig. 1 a kann nun der Sender 150 zumindest zwei Antennen $154_1$ und $154_2$ aufweisen, während der Empfänger 100 zumindest eine Antenne $104_1$ aufweisen kann. Zwischen den zumindest zwei Antennen $154_1$ und $154_2$ des Senders 154 und der zumindest einen Antenne $104_1$ des Empfängers 100 ergeben sich zumindest zwei Ausbreitungswege.

Der erste Ausbreitungsweg $102_{11}$ kann sich zwischen einer ersten Antenne $154_1$ der zumindest zwei Antennen $154_1$ und $154_2$ des Senders 150 und der zumindest einen Antenne $154_1$ des Empfängers 100 erstrecken, wobei sich der zweite Ausbreitungsweg $102_{21}$ zwischen einer zweiten Antenne $154_2$ der zumindest zwei Antennen $154_1$ und $154_2$ des Senders 154 und der zumindest einen Antenne $104_1$ des Empfängers 100 erstrecken kann.

In diesem Fall kann die Überlagerung, durch die sich das Signal, das sich bei gleichzeitiger Verwendung zweier Ausbreitungswege $102_{11}$ und $102_{21}$ durch Überlagerung ergibt, in einem Übertragungsmedium zwischen Sender 150 und Empfänger 100 oder an der einen Antenne $104_1$ des Empfängers 100 erfolgen.

Der Empfänger 100 kann ausgebildet sein, um eine Empfangssignalstärke bei Verwendung des ersten Ausbreitungswegs $102_{11}$ zu ermitteln, um einen Betrag eines ersten Kanalkoeffizienten $h_{11}$ zu erhalten, eine Empfangssignalstärke bei Verwendung des zweiten Ausbreitungswegs $102_{21}$ zu ermitteln, um einen Betrag eines zweiten Kanalkoeffizienten $h_{21}$ zu erhalten.

Ferner kann der Empfänger 100 ausgebildet sein, um eine Empfangssignalstärke eines ersten Signals, das sich bei gleichzeitiger Verwendung des ersten Ausbreitungswegs $102_{11}$ und des zweiten Ausbreitungswegs $102_{21}$ durch Überlagerung im Übertragungsmedium oder an der zumindest einen Antenne $104_1$ des Empfängers 100 ergibt, zu ermitteln, um einen Betrag einer Kombination des ersten Kanalkoeffizienten $h_{11}$ und des zweiten Kanalkoeffizienten $h_{12}$ zu erhalten.

Des Weiteren kann der Empfänger 100 ausgebildet sein, um einen Winkel zwischen dem ersten Kanalkoeffizienten $h_{11}$ und dem zweiten Kanalkoeffizienten $h_{21}$ basierend auf den Beträgen des ersten Kanalkoeffizienten $h_{11}$, des zweiten Kanalkoeffizienten $h_{21}$ und der Kombination des ersten Kanalkoeffizienten $h_{11}$ und des zweiten Kanalkoeffizienten $h_{21}$ zu berechnen.

Fig. 1c zeigt eine schematische Ansicht eines Empfängers 100 gemäß einem weiteren Ausführungsbeispiel der vorliegenden Erfindung. Verglichen mit Fig. 1a und Fig. 1b weist nun sowohl der Sender 150 zumindest zwei Antennen $154_1$ und $154_2$ als auch der Empfänger 100 zumindest zwei Antennen $104_1$ und $104_2$ auf. Zwischen den zumindest zwei Antennen $154_1$ und $154_2$ des Senders 154 und den zumindest zwei Antennen $104_1$ und $104_2$ des Empfängers 100 ergeben sich zumindest vier Ausbreitungswege. Ein erster Ausbreitungsweg $102_{11}$ erstreckt sich von der ersten Antenne $154_1$ des Senders zu der ersten Antenne $104_1$ des Empfängers. Ein zweiter Ausbreitungsweg $102_{12}$ erstreckt sich von der ersten Antenne $154_1$ des Senders 150 zu der zweiten Antenne $104_2$ des Empfängers 100. Ein dritter Ausbreitungsweg $102_{21}$ erstreckt sich von der zweiten Antenne $154_2$ des Senders 150 zu der ersten Antenne $104_1$ des Empfängers 100. Ein vierter Ausbreitungsweg $102_{22}$ erstreckt sich von der zweiten Antenne $154_2$ des Senders 150 zu der zweiten Antenne $104_2$ des Empfängers 100.

Der Empfänger 100 kann ausgebildet sein, um eine Empfangssignalstärke bei Verwendung des ersten Ausbreitungswegs $102_{11}$ zu ermitteln, um einen Betrag eines ersten Kanalkoeffizienten $h_{11}$ zu erhalten, eine Empfangssignalstärke bei Verwendung des zweiten Ausbreitungswegs $102_{12}$ zu ermitteln, um einen Betrag eines zweiten Kanalkoeffizienten $h_{12}$ zu erhalten, eine Empfangssignalstärke bei Verwendung des dritten Ausbreitungswegs $102_{21}$ zu ermitteln, um einen Betrag eines dritten Kanalkoeffizienten $h_{21}$ zu erhalten, und eine Empfangssignalstärke bei Verwendung des vierten Ausbreitungswegs $102_{22}$ zu ermitteln, um einen Betrag eines vierten Kanalkoeffizienten $h_{22}$ zu erhalten.

Der Empfänger 100 kann ausgebildet sein, um eine Empfangssignalstärke eines ersten Signals, das sich bei gleichzeitiger Verwendung des ersten Ausbreitungswegs $102_{11}$ und des zweiten Ausbreitungswegs $102_{12}$ durch Überlagerung im Empfänger 100 ergibt, zu ermitteln, um einen Betrag einer Kombination des ersten Kanalkoeffizienten $h_{11}$ und des zweiten Kanalkoeffizienten $h_{12}$ zu erhalten. Dabei kann der Empfänger 100 ausgebildet sein, um einen Winkel zwischen dem ersten Kanalkoeffizienten $h_{11}$ und dem zweiten Kanalkoeffizienten $h_{12}$ basierend auf den Beträgen des ersten Kanalkoeffizienten $h_{11}$, des zweiten Kanalkoeffizienten $h_{12}$ und der Kombination des ersten Kanalkoeffizienten $h_{11}$ und des zweiten Kanalkoeffizienten $h_{12}$ zu berechnen.

Der Empfänger 100 kann ausgebildet sein, um eine Empfangssignalstärke eines zweiten Signals, das sich bei gleichzeitiger Verwendung des ersten Ausbreitungswegs $102_{11}$ und des dritten Ausbreitungswegs $102_{21}$ durch Überlagerung im Übertragungsmedium oder an der ersten Antenne $104_1$ des Empfängers 100 ergibt, zu ermitteln, um einen Betrag einer Kombination des ersten Kanalkoeffizienten $h_{11}$ und des dritten Kanalkoeffizienten $h_{21}$ zu erhalten. Dabei kann der Empfänger 100 ausgebildet sein, um einen Winkel zwischen dem ersten Kanalkoeffizienten $h_{11}$ und dem dritten Kanalkoeffizienten $h_{21}$ basierend auf den Beträgen des ersten Kanalkoeffizienten $h_{11}$, des dritten Kanalkoeffizienten $h_{21}$ und der Kombination des ersten Kanalkoeffizienten $h_{11}$ und des dritten Kanalkoeffizienten $h_{21}$ zu berechnen.

Der Empfänger 100 kann ausgebildet sein, um eine Empfangssignalstärke eines dritten Signals, das sich bei gleichzeitiger Verwendung des zweiten Ausbreitungswegs $102_{12}$ und des vierten Ausbreitungswegs $102_{22}$ durch Überlagerung im Übertragungsmedium oder an der zweiten Antenne $104_2$ des Empfängers 100 ergibt, zu ermitteln, um einen Betrag einer Kombination des zweiten Kanalkoeffizienten $h_{12}$ und des vierten Kanalkoeffizienten $h_{22}$ zu erhalten. Dabei kann der Empfänger 100 ausgebildet sein, um einen Winkel zwischen dem zweiten Kanalkoeffizienten $h_{12}$ und dem vierten Kanalkoeffizienten $h_{22}$ basierend auf den Beträgen des zweiten Kanalkoeffizienten $h_{12}$, des vierten Kanalkoeffizienten $h_{22}$ und der Kombination des zweiten Kanalkoeffizienten $h_{12}$ und des vierten Kanalkoeffizienten $h_{22}$ zu berechnen.

Der Empfänger 100 kann ausgebildet sein, um eine Empfangssignalstärke eines vierten Signals, das sich bei gleichzeitiger Verwendung des dritten Ausbreitungswegs $102_{21}$ und des vierten Ausbreitungswegs $102_{22}$ durch Überlagerung im Empfänger 100 ergibt, zu ermitteln, um einen Betrag einer Kombination des dritten Kanalkoeffizienten $h_{21}$ und des vierten Kanalkoeffizienten $h_{22}$ zu erhalten. Dabei kann der Empfänger 100 ausgebildet sein, um einen Winkel zwischen dem ersten Kanalkoeffizienten $h_{11}$ und dem zweiten Kanalkoeffizienten $h_{22}$ basierend auf den Beträgen des ersten Kanalkoeffizienten $h_{11}$, des zweiten Kanalkoeffizienten $h_{12}$ und der Kombination des ersten Kanalkoeffizienten $h_{11}$ und des zweiten Kanalkoeffizienten $h_{22}$ zu berechnen.

Der in den Fig. 1a und 1c gezeigte Empfänger 100 kann ausgebildet sein, um eine gewichtete und/oder phasenverschobene Überlagerung der von den zumindest zwei Antennen $104_1$ und $104_2$ empfangen Signale hervorzurufen, um das Signal, das sich bei gleichzeitiger Verwendung der zwei Ausbreitungswege (z.B. des ersten Ausbreitungswegs $102_{11}$ und des zweiten Ausbreitungswegs $102_{12}$ (siehe Fig. 1a und Fig. 1c), oder des dritten Ausbreitungswegs $102_{21}$ und des vierten Ausbreitungswegs $102_{22}$ (siehe Fig. 1c)) ergibt, zu erhalten.

Beispielsweise kann der Empfänger 100 einen Vektormodulator aufweisen, wobei der Vektormodulator mit den zumindest zwei Antennen $104_1$ und $104_2$ verbunden ist, und ausgebildet ist, um die gewichtete und/oder phasenverschobene Überlagerung hervorzurufen.

Der in den Fig. 1b und 1c gezeigte Sender 150 kann ausgebildet sein, um die zumindest zwei Antennen $154_1$ und $154_2$ anzusteuern, um in einem ersten Zeitschlitz ein Signal zu dem Empfänger 100 unter Verwendung eines ersten Ausbreitungswegs zwischen dem Sender 150 und Empfänger 100 zu senden, in einem zweiten Zeitschlitz ein Signal zu dem Empfänger 100 unter Verwendung eines zweiten Ausbreitungswegs zwischen dem Sender 150 und Empfänger 100 zu senden, und in einem dritten Zeitschlitz ein Signal zu dem Empfänger 100 unter gleichzeitiger Verwendung zweier Ausbreitungswege zu senden.

Der Empfänger 100 kann demnach ausgebildet sein, um in dem ersten Zeitschlitz die Empfangssignalstärke bei Verwendung des ersten Ausbreitungswegs zwischen dem Sender 150 und dem Empfänger 100 zu ermitteln, in dem zweiten Zeitschlitz die Empfangssignalstärke bei Verwendung des zweiten Ausbreitungswegs zwischen dem Sender 150 und dem Empfänger 100 zu ermitteln, und in dem dritten Zeitschlitz die Empfangssignalstärke des Signals, das sich bei gleichzeitiger Verwendung zweier Ausbreitungswege durch Überlagerung ergibt, zu ermitteln.

Dabei kann der Sender 150 ausgebildet sein, um die unterschiedlichen Ausbreitungswege nach einer fest vorgegebenen Reihenfolge zu verwenden.

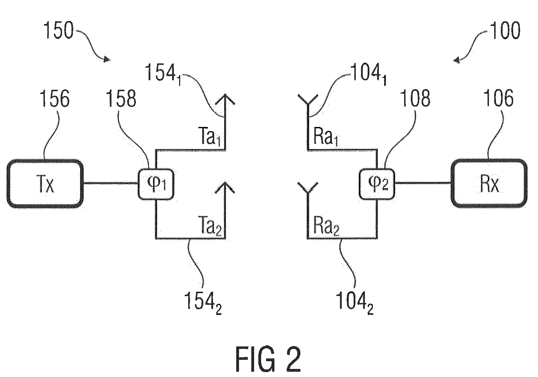

Im Folgenden werden Ausführungsbeispiele des Empfängers 100 und/oder Senders 150 anhand der Fig. 2 bis Fig. 5 näher beschrieben.

Bei Ausführungsbeispielen kann auf zwei bei nahezu jedem marktüblichen Transceiverchip verfügbare Features zurückgegriffen werden, nämlich (1) auf die Möglichkeit, beim Sender 150 ein Signal zu erzeugen, wobei es keine Rolle spielt, wie dieses Signal beschaffen ist, solange die Sendeleistung über die Signaldauer gleichmäßig genug ist, und wobei es insbesondere für die Anwendbarkeit des entwickelten Verfahrens egal ist, welche Modulation und ggf. Spreizung verwendet wird und ob/welche Informationen im Signal kodiert sind; und (2) auf die Möglichkeit, beim Empfänger die Stärke des empfangenen Signals zu messen. Außer den Transceiverchips können beim Sender 150 und/oder beim Empfänger 150 noch Vektormodulatoren zum Einsatz kommen, die in der Lage sind, ein analoges Signal direkt im HF-Bereich in Amplitude und Phase zu verändern. Diese Vektormodulatoren werden auch für den Betrieb des Mehrantennensystems bei bekannten Kanalinformationen benötigt.

Dabei kann dasselbe Signal beim Sender 150 und/oder beim Empfänger 100 in mehreren aufeinanderfolgenden Zeitschlitzen auf verschiedene Weise mit Hilfe der Vektormodulatoren kombiniert werden, so dass nacheinander verschiedene empfangs- und/oder sendeseitige Beams (dt. Keulen) entstehen, deren Empfangssignalstärke der Empfänger 100 messen kann. Bei Kenntnis der in den verschiedenen Zeitschlitzen verwendeten sende- und empfangsseitig eingesetzten Phasengewichte ist es dem Empfänger 100 dann möglich, aus diesen Signalstärken Informationen über den MIMO-Kanal zu berechnen. Diese Informationen können beispielsweise die vollständige Kanalmatrix oder direkt optimale Beamformingvektoren (dt. Strahlformungsvektoren) für die Sende- und/oder Empfangsseite sein.

Die errechneten Kanalinformationen sind zwar immer nur bis auf eine konstante (in allen Einzelkanälen gleiche) Phasenverschiebung korrekt; jedoch spielt dies für den Betrieb des Mehrantennensystems bei vielen Modulationsarten (z.B. Frequenzumtastung) keine Rolle.

Fig. 2 zeigt eine schematische Ansicht eines Empfängers 100 und eines Senders 150 (2x2-MIMO-System), gemäß einem Ausführungsbeispiel.

Der Sender 150 umfasst zwei Sendeantennen $154_1$ ($Ta_1$) und $154_2$ ($Ta_2$), einen sendeseitig eingesetzten Transmitter-/Transceiverchip 156 (Tx), und einen Vektormodulator 158 ($\varphi_1$). Der Vektormodulator 158 ($\varphi_1$) ist ausgebildet, um das vom Transmitter-/Transceiverchip 156 (TX) erhaltene Signal mit zwei verschiedenen Phasengewichten zu versehen, und um die beiden resultierenden, unterschiedlichen Signale an die zwei Sendeantennen $154_1$ ($Ta_1$) und $154_2$ ($Ta_2$) weiterzuleiten.

Der Empfänger 100 umfasst zwei Empfangsantennen $104_1$ ($Ra_1$) und $104_2$ ($Ra_2$), einen empfangsseitig eingesetzten Receiver-/Transceiverchip 106 (Rx), und einen Vektormodulator 108 ($\varphi_2$), der ausgebildet ist, um die beiden unterschiedlichen empfangenen Signale mit unterschiedlichen Phasengewichten zu versehen, um die beiden so veränderten Signale zu kombinieren, und um das so entstandene Signal an den Receiver-/Transceiverchip 106 (Rx) weiterzuleiten.

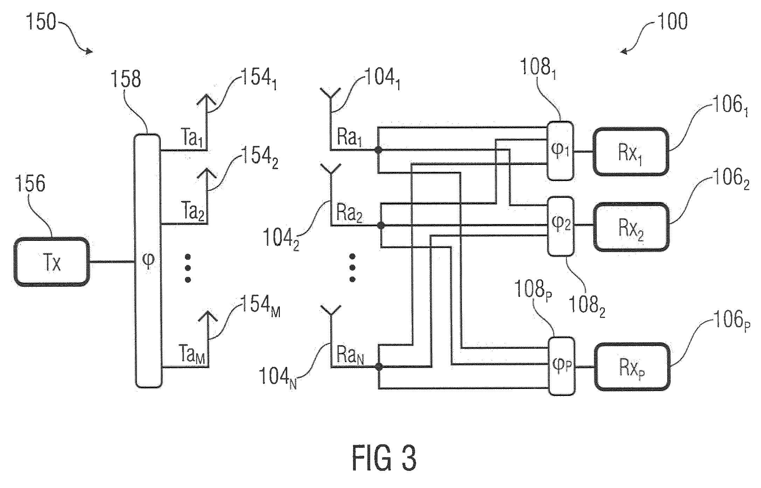

Fig. 3 zeigt eine schematische Ansicht eines Empfängers 100 und eines Senders 150 (MIMO-System), gemäß einem Ausführungsbeispiel. Mit anderen Worten, Fig. 3 zeigt eine schematische Ansicht eines MIMO-Systems als verallgemeinerte Variante des in Fig. 2 gezeigten Ausführungsbeispiels.

Der Sender 150 umfasst M Sendeantennen $154_1$ ($Ta_1$) bis $154_M$ ($Ta_M$), wobei M eine natürliche Zahl größer gleich eins ist, einen sendeseitig eingesetzten Transmitter-/Transceiverchip 156 (Tx), und einen Vektormodulator 158 ($\varphi$), der ausgebildet ist, um das vom Transmitter-/Transceiverchip 156 (Tx) erhaltene Signal mit verschiedenen Phasengewichten zu versehen, und um die resultierenden, unterschiedlichen Signale an die Sendeantennen $154_1$ ($Ta_1$) bis $154_M$ ($Ta_M$) weiterzuleiten.

Der Empfänger 100 umfasst N Empfangsantennen $104_1$ ($Ra_1$) bis $104_N$ ($Ra_N$), wobei N eine natürliche Zahl größer gleich eins ist, P empfangsseitig eingesetzte Receiver-/Transceiverchips $106_1$ ($Rx_1$) bis $106_P$ ($Rx_P$), und P Vektormodulatoren $108_1$ ($\varphi_1$) bis $108_P$ ($\varphi_P$), wobei P eine natürliche Zahl größer gleich eins ist. Die P Vektormodulatoren

$108_1$ ($\varphi_1$) bis $108_P$ ($\varphi_P$) sind ausgebildet, um die aus den N Empfangsantennen $104_1$ ($Ra_1$) bis $104_N$ ($Ra_N$) erhaltenen Signale mit unterschiedlichen Phasengewichten zu versehen, und um die so entstandenen Signale an die P Receiver-/Transceiverchips $106_1$ ($Rx_1$) bis $106_P$ ($Rx_P$) weiterzuleiten.

Wichtige Sonderfälle sind hier M = 1, N = 1 und/oder P = 1.

Der Aufwand für die Schätzung der vollständigen Kanalinformationen (d.h. die aufzuwendende Gesamtenergie des Trainings, die sich in Sendeleistung und Zeitdauer des Trainings niederschlägt) hängt normalerweise von dem Produkt MN ab. Durch eine Erhöhung von P kann diesem Aufwand entgegengewirkt werden.

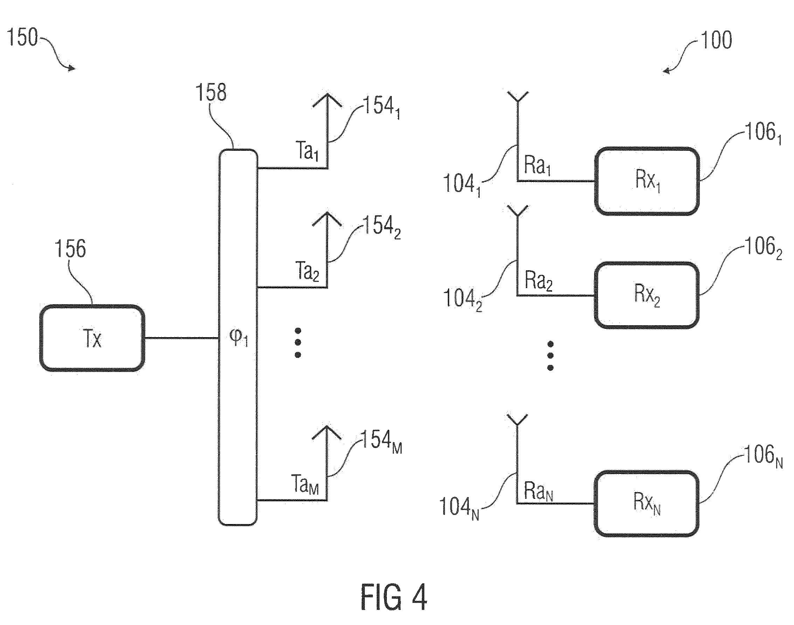

Fig. 4 zeigt eine schematische Ansicht eines Empfängers 100 und eines Senders 150 (MIMO-System), gemäß einem Ausführungsbeispiel. Mit anderen Worten, Fig. 4 zeigt ein Ausführungsbeispiel mit einer beliebigen Anzahl von Sende- und Empfangsantennen ohne Vektormodulator beim Empfänger.

Im Detail umfasst der Sender 150 M Sendeantennen $154_1$ ($Ta_1$) bis $154_M$ ($Ta_M$), wobei M eine natürliche Zahl größer gleich eins ist, einen sendeseitig eingesetzten Transmitter-/Transceiverchip 156 (Tx), und einen Vektormodulator 158 ($\varphi_1$), der ausgebildet ist, um das vom Transmitter-/Transceiverchip 156 (TX) erhaltene Signal mit verschiedenen Phasengewichten zu versehen, und um die resultierenden, unterschiedlichen Signale an die Sendeantennen $154_1$ ($Ta_1$) bis $154_M$ ($Ta_M$) weiterzuleiten.

Der Empfänger 100 umfasst N Empfangsantennen $104_1$ ($Ra_1$) bis $104_N$ ($Ra_N$) und N empfangsseitig eingesetzte Receiver-/Transceiverchips $106_1$ ($Rx_1$) bis $106_P$ ($Rx_N$), wobei N eine natürliche Zahl größer gleich eins ist, und wobei die N Receiver-/Transceiverchips $106_1$ ($Rx_1$) bis $106_P$ ($Rx_N$) direkt mit den N Empfangsantennen $104_1$ ($Ra_1$) bis $104_N$ ($Ra_N$) verbunden sind.

Wichtige Sonderfälle sind hier M = 1 und/oder N = 1.

Hier kann nur beim Sender Beamforming betrieben werden, während beim Empfänger lediglich die Bitströme kombiniert werden können. Denkbar wären beispielsweise die Verwendung des Bitstroms, der dem stärksten empfangenen Signal entspricht oder eine Form von bitweiser, nach Signalstärke gewichteter Mehrheitsentscheidung.

Dieses Ausführungsbeispiel ist auch umgekehrt denkbar (mit Vektormodulator beim Empfänger und mehreren Sendechips ohne Vektormodulator), wobei dann beim Senden beispielsweise die günstigste Antenne gewählt werden kann und empfangsseitig ein nach den errechneten Kanalinformationen optimaler Beam geformt werden kann.

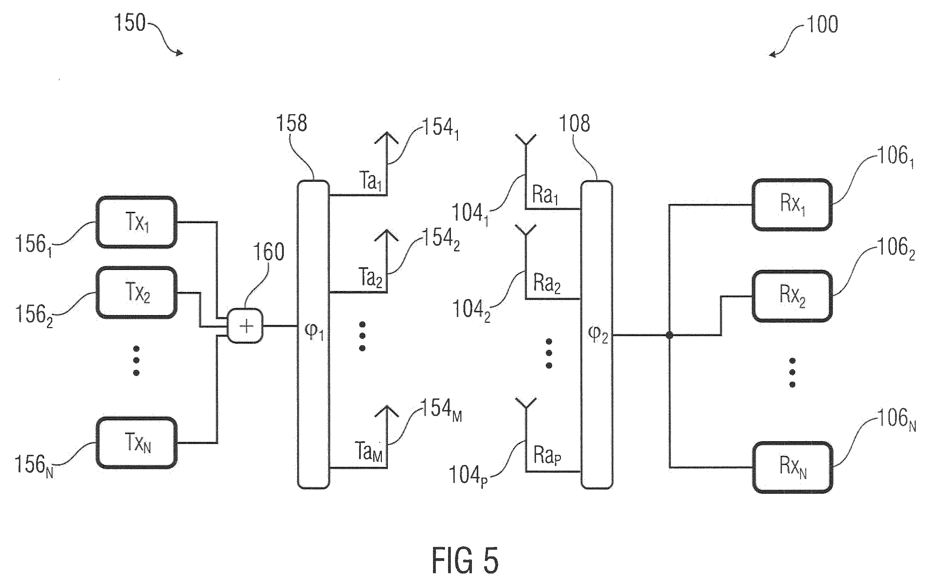

Fig. 5 zeigt eine schematische Ansicht eines Empfängers 100 und eines Senders 150 (MIMO-System), gemäß einem Ausführungsbeispiel. Mit anderen Worten, Fig. 5 zeigt ein Ausführungsbeispiel mit Multiplexing.

Der Sender 150 umfasst M Sendeantennen $154_1$ ($Ta_1$) bis $154_M$ ($Ta_M$), wobei M eine natürliche Zahl größer gleich eins ist, N sendeseitig eingesetzte Transmitter-/Transceiverchip $156_1$ ($Tx_1$) bis $156_N$ ($Tx_N$), wobei N eine natürliche Zahl größer gleich eins ist, einen Vektormodulator 158 ($\varphi_1$) und einen Kombinierer 160 (+). Die N Transmitter-/Transceiverchip $156_1$ ($Tx_1$) bis $156_N$ ($Tx_N$) sind ausgebildet, um orthogonale Signale, z.B. durch orthogonale Frequenzbänder oder Spreizverfahren, zu erzeugen. Der Kombinierer 160 (+) ist ausgebildet, um die Signale der N Transmitter-/Transceiverchip $156_1$ ($Tx_1$) bis $156_N$ ($Tx_N$) zu einem Signal zu kombinieren. Der Vektormodulator 158 ($\varphi_1$) ist ausgebildet, um das von dem Kombinierer 160 (+) erhaltene Signal mit verschiedenen Phasengewichten zu versehen, und um die resultierenden, unterschiedlichen Signale an die M Sendeantennen $154_1$ ($Ta_1$) bis $154_M$ ($Ta_M$) weiterzuleiten.

Der Empfänger 100 umfasst P Empfangsantennen $104_1$ ($Ra_1$) bis $104_P$ ($Ra_P$), wobei P eine natürliche Zahl größer gleich eins, einen Vektormodulator 108 ($\varphi_2$) und N empfangsseitig eingesetzte Receiver-/Transceiverchips $106_1$ ($Rx_1$) bis $106_N$ ($Rx_N$), wobei N eine natürliche Zahl größer gleich eins ist. Der Vektormodulator 108 ($\varphi_2$) ist ausgebildet, um die aus den P Empfangsantennen $104_1$ ($Ra_1$) bis $104_P$ ($Ra_P$) erhaltenen Signale mit unterschiedlichen Phasengewichten zu versehen, und um das so entstandene Signal an alle N Receiver-/Transceiverchips $106_1$ ($Rx_1$) bis $106_N$ ($Rx_N$) weiterzuleiten. Die N Receiver-/Transceiverchips $106_1$ ($Rx_1$) bis $106_N$ ($Rx_N$) sind so eingestellt, dass jeweils das von Txn gesendete Signal von Rxn empfangen und dekodiert werden kann.

Bei diesem Ausführungsbeispiel erfolgt die Kanalschätzung gemeinsam für das gemultiplexte Signal wie in dem in Fig. 3 gezeigten Ausführungsbeispiel. So gesehen ergibt sich in der Phase der Kanalschätzung nicht unbedingt ein Unterschied zu dem in Fig. 3 gezeiten Ausführungsbeispiel. Jedoch wäre es denkbar, dass die Signalstärkemessung an allen Empfängerchips $106_1$ ($Rx_1$) bis $106_N$ ($Rx_N$) durchgeführt und z.B. gemittelt oder auf andere Weise kombiniert wird, um eine genauere Messung zu erhalten.

Im Folgenden wird die Bestimmung der Kanalkoeffizienten bzw. der Kanalmatrix anhand der in den Fig. 1c und 2 gezeigten Ausführungsbeispiele im Detail erläutert.

Das Kanalschätzungskonzept bzw. Verfahren gemäß Ausführungsbeispielen beruht darauf, dass, auch wenn Phaseninformationen über die vier zur Verfügung stehenden Ausbreitungswege nicht direkt gewonnen werden können, es doch von den Phasenunterschieden abhängt, ob zwei verschiedene Ausbreitungswege sich auf konstruktive oder destruktive Art überlagern. Daraus kann zwar lediglich Information über die Unterschiede zwischen den Phasenverschiebungen der vier Kanäle gewonnen werden und nicht die einzelnen Phasenverschiebungen selbst; im kombinierten Signal resultiert das aber am Schluss lediglich in einer unbekannten Phasenverschiebung des Signals, während die Amplitude des kombinierten Signals optimal ist. Gegenüber dieser Phasenverschiebung jedoch ist ein FSK-Empfänger unempfindlich.

Zunächst wird der Schätzer näher beschrieben.

Der Kanalgewinn eines jeden MIMO-Kanals kann mit einer komplexen Zahl beschrieben werden. Dabei stellt der Betrag dieser Zahl die Dämpfung der Funksignals auf dem Ausbreitungsweg dar und ihr Winkel die Phasenverschiebung.

Die zu schätzende MIMO-Kanalmatrix lässt sich damit schreiben als:

$$H = \begin{pmatrix} h_{11} & h_{12} \\ h_{21} & h_{22} \end{pmatrix}$$

Wenn nun nach der Kombination im Empfänger eine Überlagerung zweier Signale entstanden ist (beispielsweise, weil der Sender mit zwei Antennen gleichzeitig gesendet oder der Empfänger mit zwei Antennen gleichzeitig empfangen hat), die zwar beide vom gleichen ursprünglichen Signal im Sender stammen, aber aufgrund unterschiedlicher Multipfadausbreitung eine Dämpfung und Phasenverschiebung gegenüber dem ursprünglichen Signal haben, die wir mit den komplexen Zahlen a und b bezeichnen, so beträgt die Signalstärke des kombinierten Signals

$$
\begin{aligned}
|a + b|^2 &= \left| |a| \cdot \cos(\varphi_a) + |a| \cdot j \sin(\varphi_a) + |b| \cdot \cos(\varphi_b) + |b| \cdot j \sin(\varphi_b) \right|^2 \\
&= (|a| \cdot \cos(\varphi_a) + |b| \cdot \cos(\varphi_b))^2 + (|a| \cdot \sin(\varphi_a) + |b| \cdot \sin(\varphi_b))^2 \\
&= |a|^2 \cdot (\cos(\varphi_a)^2 + \sin(\varphi_a)^2) + |b|^2 \cdot (\cos(\varphi_b)^2 + \sin(\varphi_b)^2) \\
&\quad + 2|a||b| \cdot (\cos(\varphi_a)\cos(\varphi_b) + \sin(\varphi_a)\sin(\varphi_b)) \\
&= |a|^2 + |b|^2 + 2|a||b| \cos(\varphi_a - \varphi_b).
\end{aligned}
$$

Dabei bezeichnet $\varphi_a$ den Winkel von a und $\varphi_b$ den Winkel von b. Im letzten Schritt wurden der Satz von Pythagoras und eines der trigonometrischen Additionstheoreme angewendet.

Mit anderen Worten repräsentiert |a| die Empfangssignalstärke bei Verwendung eines Ausbreitungswegs zwischen dem Sender und dem Empfänger, |b| die Empfangssignalstärke bei Verwendung eines anderen Ausbreitungswegs zwischen dem Sender und dem Empfänger, und |a+b| die Empfangssignalstärke des Signals, das sich bei gleichzeitiger Verwendung der beiden Ausbreitungswege durch Überlagerung ergibt.

Bezogen auf Fig. 1c und 2 können dabei folgende Kombinationen von Ausbreitungswegen verwendet werden, um für die gewählte Kombination jeweils |a|, |b| und |a+b| und daraus $\varphi_a$ - $\varphi_b$ zu ermitteln:

- der erste Ausbreitungsweg $102_{11}$ und der zweite Ausbreitungsweg $102_{12}$, wobei in diesem Fall |a| = $|h_{11}|$, |b| = $|h_{12}|$ und |a+b| = $|h_{11}+h_{12}|$ sein kann, um $\varphi_{h_{11}}$ - $\varphi_{h_{12}}$ zu ermitteln;
- der erste Ausbreitungsweg $102_{11}$ und der dritte Ausbreitungsweg $102_{21}$, wobei in diesem Fall |a| = $|h_{11}|$, |b| = $|h_{21}|$ und |a+b| = $|h_{11}+h_{21}|$ sein kann, um $\varphi_{h_{11}}$ - $\varphi_{h_{21}}$ zu ermitteln;
- zweite Ausbreitungsweg $102_{12}$ und der vierte Ausbreitungsweg $102_{22}$, wobei in diesem Fall |a| = $|h_{21}|$, |b| = $|h_{22}|$ und |a+b| = $|h_{12}+h_{22}|$ sein kann, um $\varphi_{h_{12}}$ - $\varphi_{h_{22}}$ zu ermitteln; und
- der dritte Ausbreitungsweg $102_{21}$ und der vierte Ausbreitungsweg $102_{22}$, wobei in diesem Fall |a| = $|h_{21}|$, |b| = $|h_{22}|$ und |a+b| = $|h_{21}+h_{22}|$ sein kann, um $\varphi_{h_{21}}$ - $\varphi_{h_{22}}$ zu ermitteln.

Somit allein aus den Signalstärken zweier einzelner Ausbreitungswege und ihrer Kombination auf den Kosinus ihrer Winkeldifferenz schließen können. Nun sind immer noch zwei verschiedene Winkeldifferenzen möglich, die für die Belange der MIMO-Kanalschätzung leider nicht äquivalent sind.

Bei Ausführungsbeispielen kann der Empfänger daher ferner ausgebildet sein, um eine Empfangssignalstärke eines weiteren Signals, das sich bei gleichzeitiger Verwendung zweier Ausbreitungswege durch Überlagerung ergibt, zu ermitteln, um einen Betrag einer weiteren Kombination des ersten Kanalkoeffizienten und des zweiten Kanalkoeffizienten zu erhalten, wobei das Signal und das weitere Signal zueinander phasenverschoben sind.

Mit anderen Worten, für die Kombination der Signale im Sender bzw. Empfänger stehen beliebige Phasengewichte zur Verfügung, so dass das Signal an einer der beiden Antennen um $\pi/2$ phasenverschoben werden kann, sodass das empfangene Signal den komplexen Kanalgewinn a+jb und damit entsprechend die Signalstärke

$$|a + jb|^2 = |a|^2 + |b|^2 + 2|a||b| \cos\left(\varphi_a - \varphi_b + \frac{\pi}{2}\right)$$

besitzt. Jetzt kann eindeutig auf die Phasendifferenz zwischen den beiden Wegen geschlossen werden.

Dabei kann |a| die Empfangssignalstärke bei Verwendung des ersten Ausbreitungswegs zwischen dem Sender und dem Empfänger repräsentieren, |b| die Empfangssignalstärke bei Verwendung des zweiten Ausbreitungswegs zwischen dem Sender und dem Empfänger repräsentieren, und |a+jb| die Empfangssignalstärke des weiteren Signals repräsentieren, das sich bei gleichzeitiger Verwendung zweier Ausbreitungswege durch Überlagerung ergibt.

Wiederum bezogen auf Fig. 1c und 2 können dabei ebenfalls die oben aufgeführten Kombinationen von Ausbreitungswegen verwendet werden, um für die gewählte Kombination jeweils |a|, |b| und |a+jb| und daraus $\varphi_a - \varphi_b$ zu ermitteln.

Nun werden eine mögliche Trainingssequenz und eine Methode der Messung beschrieben.

Welche Daten als Trainingssequenz genau gesendet werden, ist unerheblich. Wichtig ist nur, dass für jede zu messende Signalleistung ein Block gesendet wird, der lang genug ist, um die Leistung ausreichend genau zu messen.

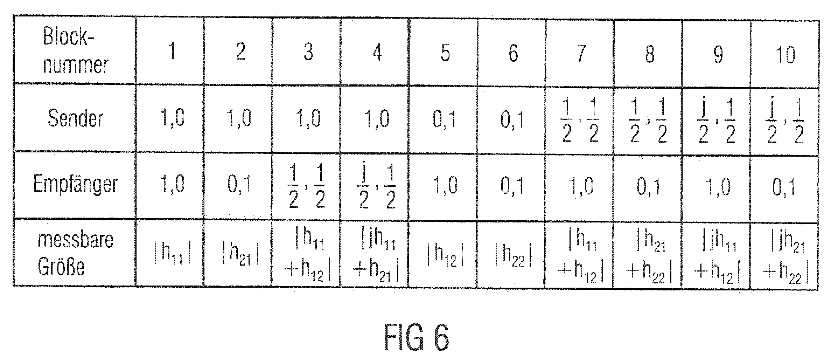

Fig. 6 zeigt in einer Tabelle eine Trainingssequenz, gemäß einem Ausführungsbeispiel. Die erste Zeile beschreibt dabei die Blocknummern (Zeitschlitznummern). Die zweite Zeile beschreibt die Phasenverschiebung / Gewichtung der Sendeantennen des Sender 154, wobei die Zahl vor dem Komma die Phasenverschiebung / Gewichtung der ersten Sendeantenne $154_1$ angibt, wobei die Zahl nach dem Komm die Phasenverschiebung / Gewichtung der zweiten Sendeantenne $154_2$ angibt. Die dritte Zeile beschreibt die Phasenverschiebung / Gewichtung der Empfangsantennen des Empfängers 100, wobei die Zahl vor dem Komma die Phasenverschiebung / Gewichtung der ersten Empfangsantenne $104_1$ angibt, wobei die Zahl nach dem Komm die Phasenverschiebung / Gewichtung der zweiten Empfangsantenne $104_2$ angibt. Die vierte Zeile beschreibt die messbaren Größen bei der entsprechenden Kombination von Phasenverschiebung / Gewichtung der Sendeantennen und Phasenverschiebung / Gewichtung Empfangsantennen.

Mit anderen Worten, bei der Darstellung der Trainingssequenz (siehe Fig. 6) entspricht jeder Block einer Signalstärkenmessung; zusätzlich kann vom Empfänger auch die Rauschleistung gemessen werden, um sie von den anderen gemessenen Größen subtrahieren zu können. In den Blöcken sind dabei die Phasengewichte am Sender bzw. Empfänger angegeben sowie welche Rückschlüsse der Empfänger bei seiner Signalstärkemessung im jeweiligen Block auf die Kanalkoeffizienten ziehen kann. Die Kanalkoeffizienten werden dabei wie oben mit $h_{11}$, $h_{12}$, $h_{21}$, $h_{22}$ bezeichnet. Ihre Winkel werden dementsprechend mit $\varphi_{11}$, $\varphi_{12}$, $\varphi_{21}$, $\varphi_{22}$ bezeichnet.

Wie oben dargelegt erlauben die gemessenen Signalstärken jetzt auch, Rückschlüsse auf die Phasenwinkel der Kanalkoeffizienten zu ziehen.

Aus den Blöcken 1, 2, 5 und 6 können die Beträge erhalten werden. Somit kann

- aus Block 3 der cos $(\varphi_{11} - \varphi_{21})$;
- aus Block 4 der cos $(\varphi_{11} - \varphi_{21} + \pi/2)$;
- aus Block 7 der cos $(\varphi_{11} - \varphi_{12})$;
- aus Block 9 der cos $(\varphi_{11} - \varphi_{12} + \pi/2)$;
- aus Block 8 der cos $(\varphi_{21} - \varphi_{22})$; und
- aus Block 10 der cos $(\varphi_{21} - \varphi_{22} + \pi/2)$

berechnet werden. Wie bereits dargelegt wurde ist es damit nun möglich, direkt auf die Winkeldifferenzen $\varphi_{11} - \varphi_{21}$, $\varphi_{11} - \varphi_{12}$ und $\varphi_{21} - \varphi_{22}$ zu schließen. Beispielsweise kann nun (willkürlich) $\varphi_{11} := 0$ gesetzt werden, um dadurch die Winkel $\varphi_{21}$, $\varphi_{12}$ und $\varphi_{22}$ und somit auch eine Kanalmatrix zu erhalten:

$$H = \begin{pmatrix} |h_{11}| & |h_{12}|e^{j\varphi_{12}} \\ |h_{21}|e^{j\varphi_{21}} & |h_{22}|e^{j\varphi_{22}} \end{pmatrix}$$

Diese Matrix ist gegenüber der tatsächlichen Kanalmatrix zwar (abgesehen von Messfehlern) um - $\varphi_{11}$ phasenverschoben; jedoch ist es wie eingangs erwähnt mit den zur Verfügung stehenden Mitteln zum einen nicht möglich, diese Verschiebung zu vermeiden, und zum anderen auch gar nicht notwendig, da sie lediglich zu einer Phasenverschiebung des kombinierten Signals führt, wogegen der FSK-Empfänger aber unempfindlich ist.

Der oben beschriebene Schätzer besitzt vor allem den bereits erwähnten Vorteil, dass er ausschließlich auf der Messung von Signalstärken basiert.

Auch wäre es theoretisch denkbar, bei Festlegung auf eine Kombinationstechnik den Beamforming-Vektor direkt und ohne Umweg über die Kanalmatrix zu ermitteln und dadurch mit noch weniger Messungen auszukommen.

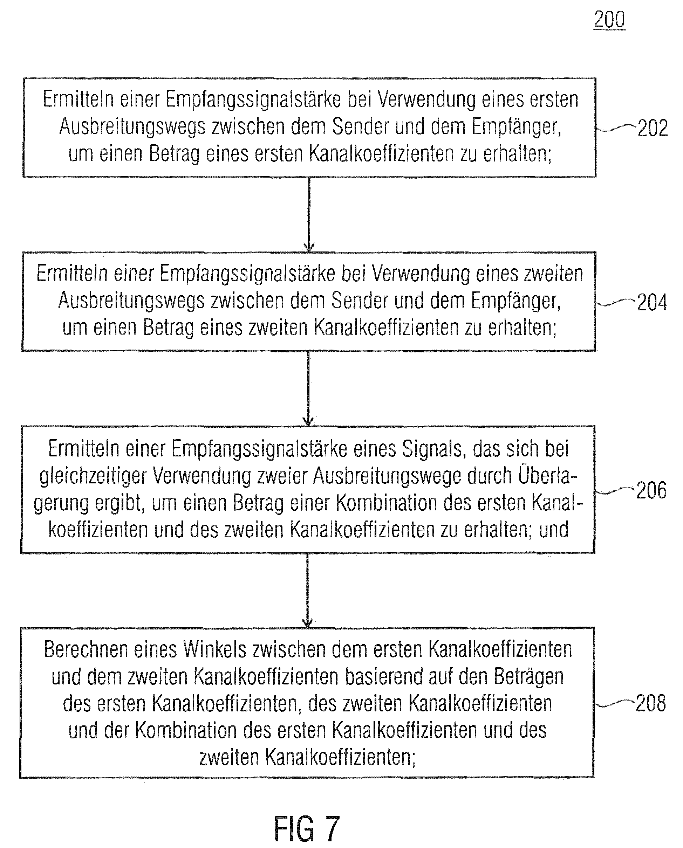

Fig. 7 zeigt ein Flussdiagramm eines Verfahrens 200 Verfahren zum Ermitteln von Kanalkoeffizienten eines Kanals zwischen einem Sender und einem Empfänger. Das Verfahren umfasst einen Schritt 202 des Ermittelns einer Empfangssignalstärke bei Verwendung eines ersten Ausbreitungswegs zwischen dem Sender und dem Empfänger, um einen Betrag eines ersten Kanalkoeffizienten zu erhalten; einen Schritt 204 des Ermittelns einer Empfangssignalstärke bei Verwendung eines zweiten Ausbreitungswegs zwischen dem Sender und dem Empfänger, um einen Betrag eines zweiten Kanalkoeffizienten zu erhalten; einen Schritt 206 des Ermittelns einer Empfangssignalstärke eines Signals, das sich bei gleichzeitiger Verwendung zweier Ausbreitungswege durch Überlagerung ergibt, um einen Betrag einer Kombination des ersten Kanalkoeffizienten und des zweiten Kanalkoeffizienten zu erhalten; und einen Schritt 208 des Berechnens eines Winkels zwischen dem ersten Kanalkoeffizienten und dem zweiten Kanalkoeffizienten basierend auf den Beträgen des ersten Kanalkoeffizienten, des zweiten Kanalkoeffizienten und der Kombination des ersten Kanalkoeffizienten und des zweiten Kanalkoeffizienten, wobei zumindest der Sender oder der Empfänger zumindest zwei Antennen aufweist, und wobei der erste Ausbreitungsweg und der zweite Ausbreitungsweg zwischen verschiedenen Kombinationen von Antennen des Senders und Empfängers verlaufen.

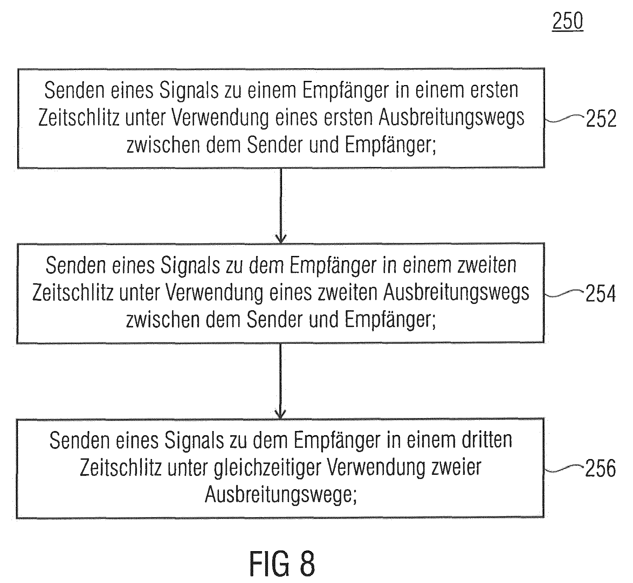

Fig. 8 zeigt ein Flussdiagramm eines Verfahrens 250 zum Betrieb eines Senders mit zumindest zwei Antennen. Das Verfahren 250 umfasst einen Schritt 252 des Sendens eines Signals zu einem Empfänger in einem ersten Zeitschlitz unter Verwendung eines ersten Ausbreitungswegs zwischen dem Sender und Empfänger; einen Schritt 254 des Sendens eines Signals zu dem Empfänger in einem zweiten Zeitschlitz unter Verwendung eines zweiten Ausbreitungswegs zwischen dem Sender und Empfänger; und einen Schritt 256 des Senden eines Signals zu dem Empfänger in einem dritten Zeitschlitz unter gleichzeitiger Verwendung zweier Ausbreitungswege,wobei der erste Ausbreitungsweg und der zweite Ausbreitungsweg zwischen verschiedenen Kombinationen von Antennen des Senders und Empfängers verlaufen.

Bei Ausführungsbeispielen kann das Signal in dem ersten Zeitschlitz unter Verwendung nur einer Antenne der zumindest zwei Antennen (1541,1542) des Senders (150) gesendet werden, während das Signal in dem zweiten Zeitschlitz unter Verwendung nur einer Antenne (1541,1542) der zumindest zwei Antennen des Senders (150) gesendet werden kann.

Bei Ausführungsbeispielen kann in dem ersten Zeitschlitz ausschließlich der erste Ausbreitungsweg und in dem zweiten Zeitschlitz ausschließlich der zweite Ausbreitungsweg verwendet werden.

Bei Ausführungsbeispielen können die Signale (in den drei Zeitschlitzen) mit der gleichen Trägerfrequenz bzw. unter Verwendung der gleichen Trägerfrequenz gesendet werden. Mit anderen Worten, die Trägerfrequenz des gesendeten Signals kann in allen drei Zeitschlitzen gleich sein.

Bei Ausführungsbeispielen kann das Signal in dem dritten Zeitschlitz auf die zwei Ausbreitungswege gleich bzw. gleichmäßig aufgeteilt werden, so dass über den ersten Ausbreitungsweg und den zweiten Ausbreitungsweg gleiche Signale gesendet werden. Mit anderen Worten, im dritten Zeitschlitz können auf den beiden Ausbreitungswegen identische Signale gesendet werden.

Ausführungsbeispiele der vorliegenden Erfindung schaffen ein generisches Kanalschätzungsverfahren, das sich zur Verwendung in Mehrantennensystemen (z.B. für den Einsatz zusammen mit Beamformingtechniken) eignet, und das auch bei Nichtvorhandensein von IQ-Signalen am Empfänger und nur begrenztem Einfluss auf die beim Sender generierten IQ-Signale funktioniert. Verfügbar sind an marktüblichen, kostengünstigen und nicht speziell für Mehrantennensysteme entwickelten Transceiverchips (Sende-/Empfangschips) normalerweise ausschließlich das dekodierte Signal (als Bitstrom) sowie eine Messung der Empfangssignalstärke (RSSI).

Die Wirkungen des Kanalschätzungsverfahrens bestehen darin, dass die für die Datenübertragung mittels Mehrantennentechniken (z.B. Beamforming) gewonnen werden können und viele dieser (bekannten) Verfahren damit erst ermöglicht werden. Der wesentliche Vorteil des hier beschriebenen Verfahrens ist, dass es im Gegensatz zu den Alternativen mit leichter und kostengünstiger verfügbaren und äußerst funktionsbeschränkten fertigen Transceiverchips umsetzbar ist und generell erfordert die Umsetzung des hier beschriebenen Verfahrens einen geringeren technischen Aufwand als bei bekannten MIMO-Kanalschätzungsverfahren. Das liegt wiederum daran, dass weniger Einfluss auf das erzeugte Trainingssignal und deutlich weniger Informationen über das empfangene Signal nötig sind.

Grundsätzlich ist es möglich, statt der in Fig. 6 beschriebenen Trainingssequenz eine andere zu verwenden, die auch ganz anders aussehen kann. Im Falle des 2x2-MIMO-Systems (siehe Fig. 2) müsste sie jedoch, um die Berechnung optimaler Beamformer (dt. Strahlformer) für die Sende- und Empfangsseite zu ermöglichen, folgende Bedingungen erfüllen:

- für mindestens einen Zeitabschnitt des Trainings müssen beide Antennen am Sender aktiviert sein;
- für mindestens einen weiteren Zeitabschnitt des Trainings müssen beide Antennen mit einem anderen Phasenunterschied als in der vorigen Bedingung aktiviert sein;
- die gleichen Bedingungen gelten am Empfänger.

Es wäre vorstellbar, dass am Sender das Training nur mit einer Antennengewichtung gesendet wird (d.h. dass das Trainingssignal über die gesamte Trainingsdauer konstant bleibt), wenn auf das sendeseitige Beamforming verzichtet wird und nur empfangsseitiges eingesetzt wird; in diesem Fall wäre jedoch auch der zu erzielende Gewinn deutlich geringer.

Ausführungsbeispiele der vorliegenden Erfindung können in jede Art von Funkkommunikation implementiert werden, bei der Mehrantennentechniken zur Verringerung des Kanalverlustes eingesetzt werden und der reine Diversitätsgewinn durch Antennenwahl nicht ausreicht, gleichzeitig aber die Auswahl an nutzbaren Transceivern eingeschränkt ist auf solche, die prinzipiell eigentlich nicht MIMO-fähig sind.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Empfänger (100), wobei der Empfänger (100) ausgebildet ist, um eine Empfangssignalstärke bei Verwendung eines ersten Ausbreitungswegs ($102_{12}$) zwischen einem Sender (150) und dem Empfänger (100) zu ermitteln, um einen Betrag eines ersten Kanalkoeffizienten ($h_{11}$) zu erhalten, eine Empfangssignalstärke bei Verwendung eines zweiten Ausbreitungswegs ($102_{12}$; $102_{21}$) zwischen dem Sender (150) und dem Empfänger (100) zu ermitteln, um einen Betrag eines zweiten Kanalkoeffizienten ($h_{12}$, $h_{21}$) zu erhalten, und eine Empfangssignalstärke eines Signals, das sich bei gleichzeitiger Verwendung zweier Ausbreitungswege ($102_1$,$102_{12}$;$102_{11}$,$102_{21}$) durch Überlagerung ergibt, zu ermitteln, um einen Betrag einer Kombination des ersten Kanalkoeffizienten ($h_{11}$) und des zweiten Kanalkoeffizienten ($h_{12}$;$h_{21}$) zu erhalten;
   wobei der Empfänger (100) ausgebildet ist, um einen Winkel zwischen dem ersten Kanalkoeffizienten ($h_{11}$) und dem zweiten Kanalkoeffizienten ($h_{12}$;$h_{21}$) basierend auf den Beträgen des ersten Kanalkoeffizienten ($h_{11}$), des zweiten Kanalkoeffizienten ($h_{12}$;$h_{21}$) und der Kombination des ersten Kanalkoeffizienten ($h_{11}$) und des zweiten Kanalkoeffizienten ($h_2$;$h_{21}$) zu berechnen; und
   wobei zumindest der Sender (150) oder der Empfänger (100) zumindest zwei Antennen ($104_1$,$104_2$; $154_1$;$154_2$) aufweist, und wobei der erste Ausbreitungsweg ($102_{11}$) und der zweite Ausbreitungsweg ($102_{12}$; $102_{21}$) zwischen verschiedenen Kombinationen von Antennen des Senders (150) und Empfängers (100) verlaufen.

2. Empfänger (100) nach Anspruch 1, wobei der Empfänger (100) ausgebildet ist die Empfangssignalstärken zu messen.

3. Empfänger (100) nach einem der Ansprüche 1 bis 2, wobei der Empfänger (100) ausgebildet ist, um zur Bestimmung von Kanalkoeffizienten keine Phasen oder Winkel zwischen empfangenen Signalen zu messen.

4. Empfänger (100) nach einem der Ansprüche 1 bis 3, wobei der Empfänger (100) zumindest zwei Antennen ($104_1$,$104_2$) aufweist, wobei sich der erste Ausbreitungsweg ($102_{11}$) zwischen einer Antenne ($154_1$) des Senders (150) und einer ersten Antenne ($104_1$) der zumindest zwei Antennen ($104_1$,$104_2$) des Empfängers (100) erstreckt, und wobei sich der zweite Ausbreitungsweg ($102_{12}$) zwischen der Antenne ($154_1$) des Senders (150) und einer zweiten Antenne ($104_2$) der zumindest zwei Antennen ($104_1$,$104_2$) des Empfängers (100) erstreckt.

5. Empfänger (100) nach Anspruch 4, wobei die Überlagerung im Empfänger (100) erfolgt.

6. Empfänger (100) nach einem der Ansprüche 1 bis 3, wobei der Sender (150) zumindest zwei Antennen ($154_1$,$154_2$) aufweist, wobei sich der erste Ausbreitungsweg ($102_{11}$) zwischen einer ersten Antenne ($154_1$) der zumindest zwei Antennen ($154_1$,$154_2$) des Senders (150) und einer Antenne ($104_1$) des Empfängers (100) erstreckt, und wobei sich der zweite Ausbreitungsweg ($102_{21}$) zwischen einer zweiten Antenne ($154_2$) der zumindest zwei Antennen ($154_1$,$154_2$) des Senders (150) und der Antenne ($104_1$) des Empfängers (100) erstreckt.

7. Empfänger (100) nach Anspruch 6, wobei die Überlagerung in einem Übertragungsmedium zwischen Sender (150) und Empfänger (100) oder an der Antenne ($104_1$) des Empfängers (100) erfolgt.

8. Empfänger (100) nach einem der Ansprüche 1 bis 7, wobei der Empfänger (100) zumindest zwei Antennen ($104_1$,$104_2$) aufweist, und wobei der Empfänger (100) ausgebildet ist, um eine gewichtete Überlagerung der von den zumindest zwei Antennen ($104_1$,$104_2$) empfangen Signale hervorzurufen, um das Signal, das sich bei gleichzeitiger Verwendung der zwei Ausbreitungswege ergibt, zu erhalten.

9. Empfänger (100) nach einem der Ansprüche 1 bis 8, wobei der Empfänger (100) zumindest zwei Antennen ($104_1$,$104_2$) aufweist, und wobei der Empfänger (100) ausgebildet ist, um eine phasenverschobene Überlagerung der von den zumindest zwei Antennen ($104_1$,$104_2$) empfangen Signale hervorzurufen, um das Signal, das sich bei gleichzeitiger Verwendung der zwei Ausbreitungswege ergibt, zu erhalten.

10. Empfänger (100) nach einem der Ansprüche 1 bis 9, wobei der Empfänger (100) zumindest zwei Antennen ($104_1$,$104_2$) und einen Vektormodulator (108) aufweist, wobei der Vektormodulator (108) mit den zumindest zwei Antennen ($104_1$,$104_2$) verbunden ist, und ausgebildet ist, um die Überlagerung hervorzurufen.

11. Empfänger (100) nach einem der Ansprüche 1 bis 10, wobei der Empfänger (100) ausgebildet ist, um den Winkel zwischen dem ersten Kanalkoeffizienten ($h_{11}$) und dem zweiten Kanalkoeffizienten ($h_{12}$,$h_{21}$) basierend auf der Formel

$$|a + b|^2 = |a|^2 + |b|^2 + 2|a||b|\cos(\varphi_a - \varphi_b)$$

zu berechnen, wobei |a| die Empfangssignalstärke bei Verwendung des ersten Ausbreitungswegs ($102_{11}$) zwischen dem Sender (150) und dem Empfänger (100) repräsentiert, |b| die Empfangssignalstärke bei Verwendung des zweiten Ausbreitungswegs ($102_{12}$,$102_{21}$) zwischen dem Sender (150) und dem Empfänger (100) repräsentiert, |a + b| die Empfangssignalstärke des Signals repräsentiert, das sich bei gleichzeitiger Verwendung zweier Ausbreitungswege ($102_{11}$,$102_{12}$;$102_{11}$,$102_{21}$) durch Überlagerung ergibt, und $\varphi_a$ - $\varphi_b$ den Winkel zwischen dem ersten Kanalkoeffizienten ($h_{11}$) und dem zweiten Kanalkoeffizienten ($h_{12}$,$h_{21}$) repräsentiert.

12. Empfänger (100) nach einem der Ansprüche 1 bis 10, wobei der Empfänger (100) ferner ausgebildet ist, um eine Empfangssignalstärke eines weiteren Signals, das sich bei gleichzeitiger Verwendung zweier Ausbreitungswege ($102_{11}$,$102_{12}$;$102_{11}$,$102_{21}$) durch Überlagerung ergibt, zu ermitteln, um einen Betrag einer weiteren Kombination des ersten Kanalkoeffizienten ($h_{11}$) und des zweiten Kanalkoeffizienten ($h_{12}$,$h_{21}$) zu erhalten;
wobei das Signal und das weitere Signal zueinander phasenverschoben sind.

13. Empfänger (100) nach Anspruch 12, wobei der Empfänger (100) ausgebildet ist, um den Winkel zwischen dem ersten Kanalkoeffizienten ($h_{11}$) und dem zweiten Kanalkoeffizienten ($h_{12}$,$h_{21}$) basierend auf der Formel

$$|a + jb|^2 = |a|^2 + |b|^2 + 2|a||b|\cos\left(\varphi_a - \varphi_b + \frac{\pi}{2}\right)$$

zu berechnen, wobei |a| die Empfangssignalstärke bei Verwendung des ersten Ausbreitungswegs ($102_{11}$) zwischen dem Sender (150) und dem Empfänger (100) repräsentiert, |b| die Empfangssignalstärke bei Verwendung des zweiten Ausbreitungswegs ($102_{12}$,$102_{21}$) zwischen dem Sender (150) und dem Empfänger (100) repräsentiert, |a + jb| die Empfangssignalstärke des weiteren Signals repräsentiert, das sich bei gleichzeitiger Verwendung zweier Ausbreitungswege ($102_{11}$,$102_{12}$;$102_{11}$,$102_{21}$) durch Überlagerung ergibt, und $\varphi_a$ - $\varphi_b$ den Winkel zwischen dem ersten Kanalkoeffizienten ($h_{11}$) und dem zweiten Kanalkoeffizienten ($h_{12}$,$h_{21}$) repräsentiert.

14. Sender (150), wobei der Sender (150) zumindest zwei Antennen ($154_1$,$154_2$) aufweist, und ausgebildet ist, um die zumindest zwei Antennen ($154_1$,$154_2$) anzusteuern, um in einem ersten Zeitschlitz ein Signal zu einem Empfänger (100) unter Verwendung eines ersten Ausbreitungswegs ($102_{11}$; $102_{12}$) zwischen dem Sender (150) und Empfänger (100) zu senden, in einem zweiten Zeitschlitz ein Signal zu dem Empfänger (100) unter Verwendung eines zweiten Ausbreitungswegs ($102_{21}$,$102_{22}$) zwischen dem Sender (150) und Empfänger (100) zu senden, und in einem dritten Zeitschlitz ein Signal zu dem Empfänger (100) unter gleichzeitiger Verwendung zweier Ausbreitungswege ($102_{11}$,$102_{21}$; $102_{11}$,$102_{21}$,$102_{12}$,$102_{22}$; $102_{21}$,$102_{22}$) zu senden;
wobei der erste Ausbreitungsweg ($102_{11}$; $102_{12}$) und der zweite Ausbreitungsweg ($102_{21}$,$102_{22}$) zwischen verschiedenen Kombinationen von Antennen des Senders (150) und Empfängers (100) verlaufen.

15. Sender (150) nach Anspruch 14, wobei der Sender (150) ausgebildet ist, um die unterschiedlichen Ausbreitungswege nach einer fest vorgegebenen Reihenfolge zu verwenden.

16. Sender (150) nach einem der Ansprüche 14 bis 15, wobei der Sender (150) einen Vektormodulator (158) aufweist, und wobei der Sender (150) ausgebildet ist, um die zumindest zwei Antennen ($154_1$,$154_2$) über den Vektormodulator anzusteuern.

17. System, mit folgenden Merkmalen:

    einem Sender (150) nach einem der Ansprüche 1 bis 13; und
    einem Empfänger (100) nach einem der Ansprüche 14 bis 16.

18. Verfahren (200) zum Ermitteln von Kanalkoeffizienten eines Kanals zwischen einem Sender (150) und einem Empfänger (100), wobei das Verfahren aufweist:

    Ermitteln (202) einer Empfangssignalstärke bei Verwendung eines ersten Ausbreitungswegs zwischen dem Sender (150) und dem Empfänger (100), um einen Betrag eines ersten Kanalkoeffizienten zu erhalten;

Ermitteln (204) einer Empfangssignalstärke bei Verwendung eines zweiten Ausbreitungswegs zwischen dem Sender (150) und dem Empfänger (100), um einen Betrag eines zweiten Kanalkoeffizienten zu erhalten;

Ermitteln (206) einer Empfangssignalstärke eines Signals, das sich bei gleichzeitiger Verwendung zweier Ausbreitungswege durch Überlagerung ergibt, um einen Betrag einer Kombination des ersten Kanalkoeffizienten und des zweiten Kanalkoeffizienten zu erhalten; und

Berechnen (208) eines Winkels zwischen dem ersten Kanalkoeffizienten und dem zweiten Kanalkoeffizienten basierend auf den Beträgen des ersten Kanalkoeffizienten, des zweiten Kanalkoeffizienten und der Kombination des ersten Kanalkoeffizienten und des zweiten Kanalkoeffizienten;

wobei zumindest der Sender (150) oder der Empfänger (100) zumindest zwei Antennen aufweist, und wobei der erste Ausbreitungsweg und der zweite Ausbreitungsweg zwischen verschiedenen Kombinationen von Antennen des Senders (150) und Empfängers (100) verlaufen.

**19.** Verfahren (250) zum Betrieb eines Senders (150) mit zumindest zwei Antennen, wobei das Verfahren aufweist:

Senden (252) eines Signals zu einem Empfänger (100) in einem ersten Zeitschlitz unter Verwendung eines ersten Ausbreitungswegs zwischen dem Sender (150) und Empfänger (100);

Senden (254) eines Signals zu dem Empfänger (100) in einem zweiten Zeitschlitz unter Verwendung eines zweiten Ausbreitungswegs zwischen dem Sender (150) und Empfänger (100);

Senden (256) eines Signals zu dem Empfänger (100) in einem dritten Zeitschlitz unter gleichzeitiger Verwendung zweier Ausbreitungswege;

wobei der erste Ausbreitungsweg und der zweite Ausbreitungsweg zwischen verschiedenen Kombinationen von Antennen des Senders (150) und Empfängers (100) verlaufen.

**20.** Computerprogramm zur Durchführung des Verfahrens nach Anspruch 18 oder 19.

FIG 1A

FIG 1B

FIG 1C

FIG 2

FIG 3

FIG 4

FIG 5

| Block-nummer | 1 | 2 | 3 | 4 | 5 | 6 | 7 | 8 | 9 | 10 |
|---|---|---|---|---|---|---|---|---|---|---|
| Sender | 1,0 | 1,0 | 1,0 | 1,0 | 0,1 | 0,1 | $\frac{1}{2},\frac{1}{2}$ | $\frac{1}{2},\frac{1}{2}$ | $\frac{j}{2},\frac{1}{2}$ | $\frac{j}{2},\frac{1}{2}$ |
| Empfänger | 1,0 | 0,1 | $\frac{1}{2},\frac{1}{2}$ | $\frac{j}{2},\frac{1}{2}$ | 1,0 | 0,1 | 1,0 | 0,1 | 1,0 | 0,1 |
| messbare Größe | $\lvert h_{11}\rvert$ | $\lvert h_{21}\rvert$ | $\lvert h_{11}+h_{12}\rvert$ | $\lvert jh_{11}+h_{21}\rvert$ | $\lvert h_{12}\rvert$ | $\lvert h_{22}\rvert$ | $\lvert h_{11}+h_{12}\rvert$ | $\lvert h_{21}+h_{22}\rvert$ | $\lvert jh_{11}+h_{12}\rvert$ | $\lvert jh_{21}+h_{22}\rvert$ |

## FIG 6

200

Ermitteln einer Empfangssignalstärke bei Verwendung eines ersten Ausbreitungswegs zwischen dem Sender und dem Empfänger, um einen Betrag eines ersten Kanalkoeffizienten zu erhalten; ⌐202

Ermitteln einer Empfangssignalstärke bei Verwendung eines zweiten Ausbreitungswegs zwischen dem Sender und dem Empfänger, um einen Betrag eines zweiten Kanalkoeffizienten zu erhalten; ⌐204

Ermitteln einer Empfangssignalstärke eines Signals, das sich bei gleichzeitiger Verwendung zweier Ausbreitungswege durch Überlagerung ergibt, um einen Betrag einer Kombination des ersten Kanalkoeffizienten und des zweiten Kanalkoeffizienten zu erhalten; und ⌐206

Berechnen eines Winkels zwischen dem ersten Kanalkoeffizienten und dem zweiten Kanalkoeffizienten basierend auf den Beträgen des ersten Kanalkoeffizienten, des zweiten Kanalkoeffizienten und der Kombination des ersten Kanalkoeffizienten und des zweiten Kanalkoeffizienten; ⌐208

FIG 7

<u>250</u>

```
┌─────────────────────────────────────────────────┐
│  Senden eines Signals zu einem Empfänger in       │
│  einem ersten Zeitschlitz unter Verwendung        │──~252
│  eines ersten Ausbreitungswegs zwischen dem       │
│  Sender und Empfänger;                             │
└─────────────────────────────────────────────────┘
                        │
                        ▼
┌─────────────────────────────────────────────────┐
│  Senden eines Signals zu dem Empfänger in         │
│  einem zweiten Zeitschlitz unter Verwendung       │──~254
│  eines zweiten Ausbreitungswegs zwischen dem      │
│  Sender und Empfänger;                             │
└─────────────────────────────────────────────────┘
                        │
                        ▼
┌─────────────────────────────────────────────────┐
│  Senden eines Signals zu dem Empfänger in         │
│  einem dritten Zeitschlitz unter gleichzeitiger   │──~256
│  Verwendung zweier Ausbreitungswege;              │
└─────────────────────────────────────────────────┘
```

FIG 8

Europäisches
Patentamt

European
Patent Office

Office européen
des brevets

# EUROPÄISCHER RECHERCHENBERICHT

Nummer der Anmeldung

EP 16 17 1330

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/087419 A1 (KHOJASTEPOUR MOHAMMAD A [US] ET AL) 12. April 2012 (2012-04-12) | 1-9, 11-15, 17-20 | INV. H04B7/04 H04L25/02 |
| Y | * Absatz [0025]; Abbildungen 1, 2 * <br> * Absatz [0013] * <br> * Absatz [0023] * <br> * Absatz [0036] - Absatz [0037] * <br> * Absatz [0017] * <br> * Absatz [0016] - Absatz [0019] * <br> * Absatz [0026] * <br> * Absatz [0022] * <br> * Absatz [0026] - Absatz [0027] * <br> ----- | 10,16 | |
| Y | EP 2 234 355 A1 (IHP GMBH [DE]; UNIV CANTABRIA [ES]) 29. September 2010 (2010-09-29) * Absatz [0068]; Abbildung 8 * <br> ----- | 10,16 | |

RECHERCHIERTE
SACHGEBIETE (IPC)

H04B
H04L

Der vorliegende Recherchenbericht wurde für alle Patentansprüche erstellt

| Recherchenort | Abschlußdatum der Recherche | Prüfer |
|---|---|---|
| München | 7. November 2016 | Spinnler, Florian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 17 1330

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-11-2016

| Im Recherchenbericht angeführtes Patentdokument | Datum der Veröffentlichung | Mitglied(er) der Patentfamilie | Datum der Veröffentlichung |
|---|---|---|---|
| US 2012087419 A1 | 12-04-2012 | KEINE | |
| EP 2234355 A1 | 29-09-2010 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. BIGUESH ; A. B. GERSHMAN.** Training-Based MIMO Channel Estimation: A Study of Estimator Tradeoffs and Optimal Training Signals. *IEEE Transactions on Signal Processing,* Marz 2006, 884-896

- **G. LEUS ; W. ZHAO ; G. B. GIANNAKIS ; H. DELIÇ.** Space-Time Frequency Shift-Keying. *IEEE Transactions on Communications*
- **E. JANDOT ; J.-C. BELFIORE.** A 2x2 Antennas Bluetooth System. *IEEE Communications Letters,* September 2005